(19) Europäisches Patentamt
European Patent Office
Office européen des brevets

(11) **EP 4 369 116 A1**

(12) **EUROPÄISCHE PATENTANMELDUNG**

(43) Veröffentlichungstag:
**15.05.2024   Patentblatt 2024/20**

(21) Anmeldenummer: 23208323.8

(22) Anmeldetag: **07.11.2023**

(51) Internationale Patentklassifikation (IPC):
**G05B 13/02** *(2006.01)*

(52) Gemeinsame Patentklassifikation (CPC):
**G05B 13/021**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **08.11.2022   AT 508512022**

(71) Anmelder: **B&R Industrial Automation GmbH 5142 Eggelsberg (AT)**

(72) Erfinder:
• **Weißbacher, Joachim**
  **5142 Eggelsberg (AT)**
• **Herzog, Helmut**
  **5142 Eggelsberg (AT)**

(74) Vertreter: **Patentanwälte Pinter & Weiss OG Prinz-Eugen-Straße 70 1040 Wien (AT)**

(54) **VERFAHREN ZUR STILLSTANDSREGELUNG EINES MEHRKÖRPERSYSTEMS**

(57)   Um bei einem Verfahren zur Stillstandsregelung eines Mehrkörpersystems (MKS) mit zumindest einem Antriebs-Körper ($J_A$) und zumindest einem mit dem Antriebs-Körper ($J_A$) mechanisch gekoppelten Reibungs-Körper ($J_R$), wobei auf den Reibungs-Körper ($J_R$) eine Haftreibung ($\mu$) wirkt, einen stabilen Betrieb sicherzustellen, wird eine Geschwindigkeit eines der Körper ($J_A$, $J_R$) des Mehrkörpersystems (MKS) als mit einem Messrauschen ($n_v$) behaftete Mess-Geschwindigkeit ($v_{mess}$) ermittelt und in einem Totzonen-Element (101) zu einer Totzonen-Geschwindigkeit ($v_{tot}$) gewandelt, wobei die Totzonen-Geschwindigkeit ($v_{tot}$) für Werte der Mess-Geschwindigkeit ($v_{mess}$) über einem Wert Null und unter einem positiven Totzonen-Grenzwert ($v_{tot,O}$) einen Wert Null und für Werte der Mess-Geschwindigkeit ($v_{mess}$) über dem positiven Totzonen-Grenzwert ($v_{tot,O}$) den Wert der Mess-Geschwindigkeit ($v_{mess}$) annimmt, und die Totzonen-Geschwindigkeit ($v_{tot}$) einem Geschwindigkeits-Regler ($R_n$) als Ist-Geschwindigkeit ($v_{ist}$) zum Regeln zugeführt.

Fig. 3

**Beschreibung**

Die gegenständliche Erfindung betrifft ein Verfahren zur Stillstandsregelung eines Mehrkörpersystems umfassend zumindest einen Antriebs-Körper und einen mit dem Antriebs-Körper mechanisch gekoppelten Reibungs-Körper, wobei ein Geschwindigkeits-Regler aus einer vorgegebenen Soll-Geschwindigkeit $v_{soll}=0$ und aus einer Ist-Geschwindigkeit des Mehrkörpersystems eine Stellgröße zum Einregeln der Ist-Geschwindigkeit auf die Soll-Geschwindigkeit ermittelt, wobei die Stellgröße durch einen Aktuator in eine auf den Antriebs-Körper wirkende Antriebskraft gewandelt wird und wobei auf den Reibungs-Körper eine Haftreibung wirkt.

Die Regelung von Geschwindigkeiten ist eine oftmalige Aufgabe auf dem Gebiet der Antriebstechnik. Der Begriff "Geschwindigkeit" ist dabei weit zu fassen, sodass im Zuge der nachfolgenden Ausführungen Lineargeschwindigkeiten, Winkelgeschwindigkeiten, Drehzahlen, Bahngeschwindigkeiten usw. unter dem Begriff Geschwindigkeit subsumiert werden. Im gegenständlichen Kontext werden Geschwindigkeiten weiters als Geschwindigkeiten von (mechanischen) Mehrkörpersystemen aufgefasst, wobei im Rahmen dieser Patentanmeldung unter Mehrkörpersystem ein mechanisches System von Einzelkörpern verstanden wird, die untereinander mechanisch gekoppelt sind (z. B. durch Gelenke oder Kraftelemente, wie Federn oder Dämpfer) und die unter dem Einfluss von Kräften stehen (z.B. von Aktuatoren oder Servomotoren oder Elektromotoren erzeugte Kräfte). Als Beispiele für Mehrkörpersysteme mit zu regelnden Geschwindigkeiten können Verbrennungskraftmaschinen, deren Kurbelwellendrehzahlen zu regeln sind, elektrische Maschinen, deren Rotordrehzahlen zu regeln sind, oder generell von Maschinen angetriebene Antriebsstränge mit mehreren Massen/Trägheiten, deren Winkelgeschwindigkeiten zu regeln sind, genannt werden.

Mit der Aufgabe "Geschwindigkeitsregelung eines Mehrkörpersystems" können vielfältige Anforderungen verknüpft sein. Oftmals wird hierbei die zeitliche Verkürzung von Einschwingvorgängen, die Erhöhung der Robustheit von (Geschwindigkeits-)Regelkreisen gegenüber Störungen, die Reduktion der eingesetzten Stellenergie, oder die Unterdrückung von Vibrationen und/oder Schwingungen gefordert. Dabei zeigt sich, dass bei der Auslegung von Geschwindigkeits-Reglern zur Erfüllung der genannten Anforderungen in einem besonderen Maß auf die Wahrung der Stabilität der entstehenden Geschwindigkeits-Regelkreise zu achten ist. Geschwindigkeits-Regler dienen bekanntermaßen der Ermittlung von Stellgrößen zur Reduktion von Regelfehlern zwischen zu regelnden Geschwindigkeiten und Soll-Geschwindigkeiten, die für die zu regelnden Geschwindigkeiten vorgegeben werden. In ebenso bekannter Weise sind Stellgrößen typischerweise Kräfte wie Antriebskräfte, Drehmomente oder elektrische Ströme oder andere physikalische Kräfte, die von einem Geschwindigkeits-Regler vorgegeben werden können, und die es erlauben, eine zu regelnde Geschwindigkeit zu beeinflussen. Geht nun die Stabilität eines Geschwindigkeits-Regelkreises verloren, kann es zu unerwünschtem bis hin zu schadhaftem Verhalten kommen, wie zu aufklingenden Schwingungen oder Grenzzyklen im Geschwindigkeits-Regelkreis, d.h. zu Dauerschwingungen mit üblicherweise gleichbleibender Amplitude einer schwingenden Größe, z.B. einer schwingenden Geschwindigkeit.

Aufgrund der besonderen Relevanz des Themenbereichs "Stabilität von Geschwindigkeits-Regelkreisen" bietet der Stand der Technik vielfältige diesbezügliche Überlegungen.

Beispielsweise lehrt die DE 19742370 B4 eine Regelung eines elektrischen Leistungslenksystems eines Fahrzeugs, wobei zur Verbesserung der Stabilität der Regelung hochgenaue Schätzwerte einer Motorwinkelgeschwindigkeit ermittelt und eine Phasenkorrektur einer Lenkdrehkraft durchgeführt werden.

Die EP 0473914 A2 zeigt demgegenüber ein System zur Regelung eines Stellwerks in einem Kraftfahrzeug, wobei ein einzuregelnder Sollwert durch einen Führungsformer, der wiederum von einem Schätzwert einer zu regelnden Größe abhängt, beeinflusst wird, um in verschiedenen Betriebsbedingungen die Dynamik des Systems zu verbessern, ohne dabei die Stabilität des geschlossenen Regelkreises zu verschlechtern.

Worauf im zitierten Stand der Technik jedoch nur unzureichend eingegangen wird, ist der Umstand, dass im Rahmen bekannter Ansätze zur Geschwindigkeitsregelung sehr oft präzise und in der Konsequenz mathematisch aufwendige Modelle erforderlich sind, um das dynamische Verhalten eines zu regelnden Mehrkörpersystems in hoher Genauigkeit abbilden und davon ausgehend Geschwindigkeits-Regler entwerfen zu können, die die Wahrung der Stabilität in sämtlichen zu erwartenden Betriebspunkten eines Geschwindigkeits-Regelkreises gewährleisten. Ein wichtiger Bereich, in dem eine exakte Modellierung mit oftmals besonderen Schwierigkeiten verknüpft ist, sind hierbei Reibungen, die auf bestimmte Körper eines Mehrkörpersystems wirken können. Insbesondere in Bezug auf die in der Realität typischerweise wirkende Haftreibung ist es vielfach nur mit großem Aufwand möglich, genaue Vorhersagen hinsichtlich der tatsächlich vorherrschenden Reibungen bzw. Reibkräfte zu treffen.

In einer überraschenden Weise wurde in diesem Zusammenhang festgestellt, dass Haftreibung, die auf Körper eines Mehrkörpersystems wirkt, welche jedoch nicht von einer Antriebskraft angetrieben werden, z.B. durch eine von einem Aktuator erzeugte Antriebskraft zum Zweck einer Geschwindigkeitsregelung, gerade im Bereich des Stillstands des Mehrkörpersystems zu Stabilitätsproblemen führen kann. Dieser Umstand lässt sich in nachvollziehbarer Weise anhand eines geschwindigkeitsgeregelten Zweikörpersystems mit zwei mechanisch gekoppelten Körpern erläutern. Konkret wird dazu von einem Zweikörpersystem mit einem Antriebs-Körper ausgegangen, auf welchen eine Antriebskraft wirkt und welcher über eine mechanische Wellenverbindung mit einem Reibungs-Körper verbunden ist, wobei auf den Reibungs-Körper wiederum lediglich eine über die mechanische Wellenverbindung übertragene Wellenkraft sowie eine nicht vernachlässigbare Haftreibung wirken.

Typischerweise wird für ein solches geschwindigkeitsgeregeltes Zweikörpersystem ein Geschwindigkeits-Regler vorgesehen, welcher aus einer vorgegebenen Soll-Geschwindigkeit sowie aus einer Ist-Geschwindigkeit des Zweikörpersystems einen Geschwindigkeits-Regelfehler ermittelt, z.B. durch Differenzbildung, und aus dem Geschwindigkeits-Regelfehler eine Stellgröße bestimmt wird, die auf den Antriebs-Körper einwirken muss, um den Regelfehler auszugleichen, um also die Geschwindigkeit auf die Soll-Geschwindigkeit einzuregeln. Als Stellgröße wird üblicherweise eine Antriebskraft zum Einregeln der Ist-Geschwindigkeit auf die Soll-Geschwindigkeit vorgesehen, wodurch der Geschwindigkeits-Regelfehler idealerweise zu Null gebracht wird.

Wird nun eine verschwindende Soll-Geschwindigkeit von $v_{soll}=0$ vorgesehen, so ist klar, dass die vom Geschwindigkeits-Regler geforderte Antriebskraft verschwindet, also zu Null wird, wenn die Ist-Geschwindigkeit der Soll-Geschwindigkeit entspricht, im konkreten Fall also ebenfalls bei Null liegt. Ist die Ist-Geschwindigkeit allerdings wie in der Praxis üblich mit Messrauschen überlagert, nimmt die Ist-Geschwindigkeit den Wert Null nie exakt an, auch im Stillstand nicht, sondern fluktuiert zwischen geringfügig von Null verschiedenen Werten. Diese geringfügig von Null verschiedenen Werte haben im Stillstand oder nahe dem Stillstand des Mehrkörpersystems zur Konsequenz, dass im Geschwindigkeits-Regler fortlaufend zwar nur geringfügige, aber dennoch von Null verschiedene Geschwindigkeits-Regelfehler vorherrschen, aus denen der Geschwindigkeits-Regler von Null verschiedene Stellgrößen bzw. Antriebskräfte ermittelt.

Geringe vom Geschwindigkeits-Regler ermittelte und vorgegebene Antriebskräfte führen in weiterer Folge zu von Null verschiedenen über die mechanische Wellenverbindung übertragenen Wellenkräften. Wirkt nun auf den vom Antriebs-Körper verschiedenen Reibungs-Körper des Mehrkörpersystems Haftreibung, kann in diesem Szenario der Fall eintreten, dass die über die mechanische Kopplung übertragenen Wellenkräfte die wirkende Haftreibung nicht überschreiten. Trotz von Null verschiedener Antriebskraft kommt es damit zu keiner Bewegung des Reibungs-Körpers, der Reibungs-Körper bleibt also im Stillstand. Aus Sicht des Reglers verhält sich der Reibungs-Körper damit wie ein Körper mit unendlich hoher Trägheit bzw. unendlich hoher Masse.

Wurde der Geschwindigkeits-Regler allerdings auf Basis der im Normalbetrieb, also abseits des Stillstandes, wirksamen Trägheit des Reibungs-Körpers ausgelegt, ergibt sich im Stillstand eine signifikante Abweichung zwischen Modellannahme für die Reglerauslegung und realem Verhalten. Der Geschwindigkeits-Regler wurde also auf Basis eines völlig falschen Modells entworfen. Es ist offensichtlich, dass es in einem derartigen Szenario zum Verlust von Stabilität kommen kann, insbesondere wenn man bedenkt, dass Erhöhungen der Trägheiten bzw. Massen der Körper eines Mehrkörpersystems zur Verschiebung von Resonanzfrequenzen des Mehrkörpersystems in Richtung niedrigerer Frequenzen führen, womit in vielen praktischen Fällen eine Erhöhung der Verstärkung in den Resonanzpunkten einhergeht. Insbesondere auf dieses mit Haftreibung verknüpfte Problemfeld wird im Stand der Technik nicht eingegangen.

Es ist demnach eine Aufgabe der gegenständlichen Erfindung, eine robuste Methode zur Stillstandsregelung eines reibungsbehafteten Mehrkörpersystems anzugeben, durch welche auch ohne Kenntnis eines genauen Modells des Mehrkörpersystems ein stabiler Betrieb des Mehrkörpersystems gewährleistet wird.

Diese Aufgabe wird für ein eingangs genanntes Verfahren durch die Merkmale der Kennzeichen der unabhängigen Ansprüche gelöst. Die unabhängigen Ansprüche beschreiben hierbei ein Verfahren zur Stillstandsregelung eines Mehrkörpersystems sowie einen Regelkreis.

Konkret wird wie eingangs erwähnt von einem Mehrkörpersystem umfassend zumindest einen Antriebs-Körper und zumindest einen mit dem Antriebs-Körper mechanisch gekoppelten Reibungs-Körper ausgegangen, wobei ein Geschwindigkeits-Regler aus einer vorgegebenen Soll-Geschwindigkeit $v_{soll}=0$ und aus einer Ist-Geschwindigkeit des Mehrkörpersystems eine Stellgröße zum Einregeln der Ist-Geschwindigkeit auf die Soll-Geschwindigkeit ermittelt, wobei die Stellgröße durch einen Aktuator in eine auf den Antriebs-Körper wirkende Antriebskraft gewandelt wird und auf den Reibungs-Körper eine Haftreibung wirkt.

Erfindungsgemäß ist für ein derartiges Mehrkörpersystem vorgesehen, eine Geschwindigkeit eines der Körper des Mehrkörpersystems als mit einem Messrauschen behaftete Mess-Geschwindigkeit zu ermitteln und diese einem Totzonen-Element zuzuführen. Das Totzonen-Element wandelt die Mess-Geschwindigkeit zu einer Totzonen-Geschwindigkeit, welche für Werte der Mess-Geschwindigkeit über einem Wert Null und unter einem positiven Totzonen-Grenzwert einen Wert Null und für Werte der Mess-Geschwindigkeit über dem positiven Totzonen-Grenzwert den Wert der Mess-Geschwindigkeit annimmt. Der positive Totzonen-Grenzwert wird dabei größer als ein vorgegebener Maximalwert des Messrauschens der Mess-Geschwindigkeit gewählt, und die Totzonen-Geschwindigkeit wird dem Geschwindigkeits-Regler als Ist-Geschwindigkeit zum Regeln zugeführt.

Entsprechend dem erfindungsgemäßen Verfahren wird der im Rahmen der Geschwindigkeitsregelung entstehende Geschwindigkeits-Regelkreis in Fällen aufgetrennt, in denen es aufgrund von Haftreibung zu einem Stabilitätsverlust kommen kann. Die Verwendung eines Totzonen-Elements stellt eine effektive wie einfache Maßnahme dar, durch die es auf robuste und nachhaltige Weise möglich wird, die destabilisierende Wirkung von Messrauschen im Stillstand zu unterdrücken. Zur Umsetzung dieser Unterdrückung ist es erforderlich, die Totzonen-Grenzwerte geeignet zu parametrieren, sodass in Fällen eines möglichen Stabilitätsverlustes kein Messrauschen mehr im rückgeführten Geschwindigkeitssignal als destabilisierende Anregung verbleibt, was durch die gegenständliche Erfindung ebenfalls sichergestellt wird. Es ist hervorzuheben, dass durch das erfindungsgemäße Totzonen-Element der Regelkreis im Stillstand und damit in Fällen aufgetrennt wird, in denen von einem Geschwindigkeits-Regler meist ohnehin keine Aktivität gefordert ist. Das Totzonen-Element ist überdies einfach zu parametrieren und kann leicht in bereits bestehende Reglerstrukturen eingebracht bzw. integriert werden.

Bezüglich der im Rahmen der Erfindung erforderlichen Ermittlung einer mit Messrauschen behafteten Mess-Geschwindigkeit ist anzumerken, dass die konkrete Art der Ermittlung für die Erfindung unerheblich ist. Tatsächlich kann die mit einem Messrauschen behaftete Mess-Geschwindigkeit direkt gemessen werden, oder auch aus einem andere Messsignal, beispielsweise aus einer Mess-Position, oder auch aus mehreren Messsignalen von einem oder von mehreren der Körper des Mehrkörpersystems ermittelt bzw. geschätzt werden. Dabei können die unterschiedlichsten Ausgangssignale als Messsignale eines Körpers des Mehrkörpersystems herangezogen werden, wie elektrische Ströme oder Spannungen oder Beschleunigungen oder Kräfte die auf einen Körper wirken, und es können insbesondere verschiedene Konzepte der regelungstechnischen Beobachtertechnik eingesetzt werden, was in einem besonderen Maß zur Flexibilität der erfindungsgemäßen Lösung beiträgt.

Natürlich ist die Verwendung der Erfindung nicht auf positive Geschwindigkeiten begrenzt. In einer vorteilhaften Weise kann im Totzonen-Element in Situationen mit positiven und negativen Geschwindigkeiten auch ein negativer Totzonen-Grenzwert vorgesehen werden, wobei vorteilhafterweise ein Betrag, z.B. der Absolutbetrag oder eine quadratische Norm oder eine andere Norm, des negativen Totzonen-Grenzwertes größer als ein vorgegebener Maximalwert des Messrauschens der Mess-Geschwindigkeit gewählt wird, sodass die Totzonen-Geschwindigkeit für zwischen dem negativen Totzonen-Grenzwert und dem positiven Totzonen-Grenzwert liegende Werte der Mess-Geschwindigkeit einen Wert Null annimmt und für unter dem negativen Totzonen-Grenzwert liegende und für über dem positiven Totzonen-Grenzwert liegende Werte der Mess-Geschwindigkeit den Wert der Mess-Geschwindigkeit annimmt.

Um auch in Fällen der Verwendung eines negativen Totzonen-Grenzwertes eine einfache Parametrierung zu gewährleisten, kann in einer vorteilhaften Weise vorgesehen werden, dem negativen Totzonen-Grenzwert und dem positiven Totzonen-Grenzwert den gleichen Betrag zuzuweisen. Auf diese Weise muss nach wie vor nur ein einzelner Wert zur Parametrierung des Totzonen-Elements gewählt werden, und es wird überdies sichergestellt, dass das Totzonen-Element positive wie negative Werte der Mess-Geschwindigkeit auf die gleiche Weise beeinflusst.

In einer weiteren vorteilhaften Ausgestaltung kann vorgesehen sein, die vom Totzonen-Element bereitgestellte Totzonen-Geschwindigkeit einer Tiefpassfilterung zu unterziehen, bevor sie dem Geschwindigkeits-Regler als Ist-Geschwindigkeit zugeführt wird, beispielsweise um ungewünschte Frequenzbereiche in der Ist-Geschwindigkeit zu unterdrücken, z.B. Resonanzfrequenzen. In diesem Zusammenhang ist zu betonen, dass die erfindungsgemäße Wirkung eines Totzonen-Elements nicht durch einen wie auch immer gearteten Hoch- oder Tief- oder Bandpassfilter realisiert werden kann, da durch derartige Filter üblicherweise nicht sichergestellt werden kann, dass Messrauschen in der Gesamtheit aller im Messrauschen auftretenden Frequenzen bzw. Frequenzbänder zur Gänze eliminiert wird, was für die gegenständlich angestrebte Gewährleistung der Stabilität aber erforderlich ist.

Ebenso erweist es sich vielfach als vorteilhaft, sämtliche Werte der Mess-Geschwindigkeit unter dem Wert Null auf eine Totzonen-Geschwindigkeit mit dem Wert Null abzubilden. In Situationen, in denen typischerweise nur positive Geschwindigkeiten bzw. nur Geschwindigkeiten in nur eine Richtung auftreten, kann auf diese Weise eine besonders einfache Umsetzung des erfindungsgemäßen Totzonen-Elements sichergestellt werden, da in diesem Fall lediglich ein einzelner Wert, konkret der positive Totzonen-Grenzwert, vorgegeben werden muss und lediglich mit diesem Wert ein Vergleich vorgenommen werden muss, um festzustellen, welche Werte der Mess-Geschwindigkeit auf eine Totzonen-Geschwindigkeit mit dem Wert Null abzubilden sind.

Im Rahmen der gegenständlichen Erfindung nimmt der Maximalwert des Messrauschens der Mess-Geschwindigkeit eine wichtige Rolle ein, da wie beschrieben die Wahl der vorzugebenden Totzonen-Grenzwerte von diesem Maximalwert abhängt. Vielfach ist der Maximalwert des Messrauschens bereits bekannt, beispielsweise aus Datenblattangaben oder als Erfahrungswert oder aus vergangenen Messungen. In einer vorteilhaften Weise kann der Maximalwert des Messrauschens der Mess-Geschwindigkeit aber auch (neu) ermittelt bzw. bestimmt werden, beispielsweise durch eine Identifikationsmessung im Stillstand des Mehrkörpersystems, wobei während eines vorgegebenen Identifikations-Messintervalls der zeitliche Verlauf der Mess-Geschwindigkeit aufgezeichnet wird und der betragsmäßig größte Wert des aufgezeichneten zeitlichen Verlaufs der Mess-Geschwindigkeit als Maximalwert des Messrauschens der Mess-Geschwindigkeit ermittelt wird. Eine derartige Identifikationsmessung kann beispielsweise in einer Stillstandsphase während des Betriebs des Mehrkörpersystems durchgeführt werden, oder aber auch in einer Stillstandsphase vor Betriebsbeginn des Mehrkörpersystems, und es können die Totzonen-Grenzwerte an neu identifizierte Maximalwert des Messrauschens der Mess-Geschwindigkeit angepasst werden.

Anhand einer Neuidentifikation des Maximalwertes des Messrauschens kann sichergestellt werden, dass der zur Parametrierung des Totzonen-Elements herangezogene Maximalwert des Messrauschens stets korrekt und akkurat ist, und dass destabilisierendes Messrauschen nicht trotz vorhandenen Totzonen-Elements dennoch im Geschwindigkeitsregelkreis rückgekoppelt wird, beispielsweise weil die Totzonen-Grenzwerte aufgrund von Veränderungen z.B. des Messrauschens plötzlich betragsmäßig zu klein gewählt sind. Insbesondere bei Geschwindigkeits-Regelkreisen, die Belastungen und damit einhergehend Verschleiß und Alterung ausgesetzt sind, kann sich das auftretende Messrauschen mit der Zeit verändern, auch elektromagnetische Störungen bzw. Einstreuungen können sich in diesem Zusammenhang negativ auswirken. In derartigen Szenarien erweist es sich vielfach als besonders vorteilhaft, den Maximalwert des Messrauschens mitunter auch während des Betriebs neu zu identifizieren und damit zu aktualisieren.

Weiters wird die der Erfindung zu Grund liegende Aufgabe durch einen Regelkreis zur Stillstandsregelung eines Mehrkörpersystems gelöst, in welchem eine Geschwindigkeits-Ermittlungseinheit vorgesehen ist, welche ausgestaltet ist, eine Geschwindigkeit eines Körpers des Mehrkörpersystems als mit einem Messrauschen behaftete Mess-Geschwindigkeit zu ermitteln und die ermittelte Mess-Geschwindigkeit einem erfindungsgemäßen Totzonen-Element zuzuführen, wobei das Totzonen-Element, wie erwähnt, dazu ausgestaltet ist, die Totzonen-Geschwindigkeit dem Geschwindigkeits-Regler als Ist-Geschwindigkeit zum Regeln zuzuführen.

In einer vorteilhaften Weise kann das Totzonen-Element hierbei als Bestandteil der Geschwindigkeits-Ermittlungseinheit ausgeführt sein.

Ebenso kann vorgesehen sein, mittels des Totzonen-Elements eine Quantisierung der Mess-Geschwindigkeit zu implementieren, wobei die Quantisierung größer ist als der Maximalwert des Messrauschens der Mess-Geschwindigkeit, sodass die quantisierte Mess-Geschwindigkeit der Totzonen-Geschwindigkeit entspricht.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt

Fig.1 einen Geschwindigkeits-Regelkreis für ein Zweikörpersystem nach Stand der Technik,

Fig.2 ein zu einem gefesselten Einkörpersystem degeneriertes Zweikörpersystem,

Fig.3 einen erfindungsgemäßen Geschwindigkeits-Regelkreis mit einem Totzonen-Element für ein Zweikörpersystem,

Fig.3a ein erfindungsgemäßes Totzonen-Element,

Fig.4 eine Kaskade aus einem übergeordneten Positionsregler und einem unterlagerten, erfindungsgemäßen Geschwindigkeits-Regelkreis für ein beispielhaftes Zweikörpersystem,

Fig.5 eine Serienschaltung aus einem Quantisierungselement, einem Differenzierer und einem Totzonen-Element,

Fig.6 eine Serienschaltung aus einem Quantisierungselement und einem Differenzierer,

Fig.7 mit einem Verfahren nach Stand der Technik erzielte Resultate, und

Fig.8 mit dem erfindungsgemäßen Verfahren erzielte Resultate bei der Geschwindigkeitsregelung eines Mehrkörpersystems.

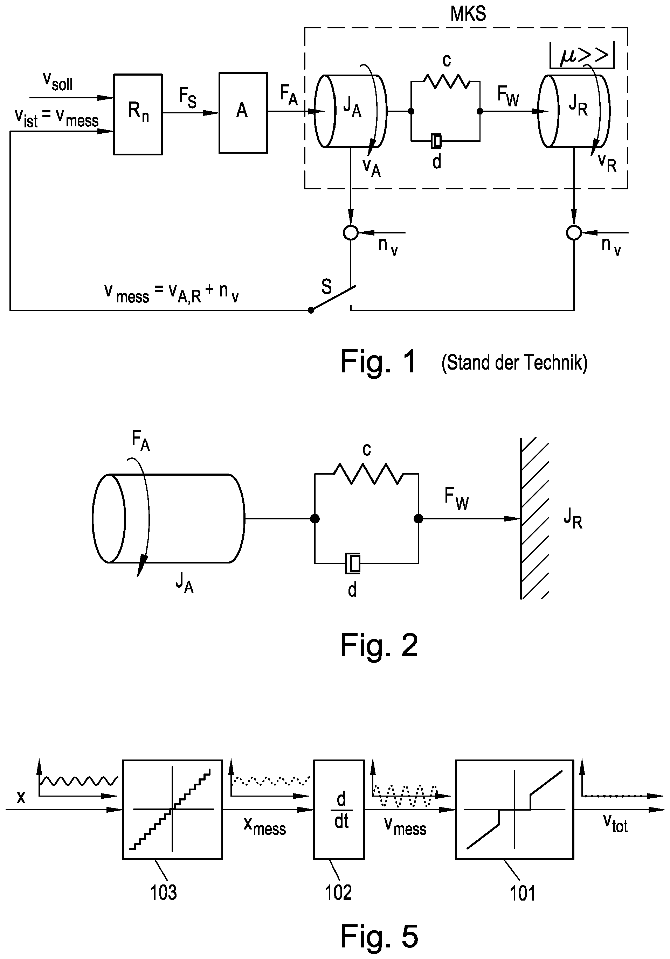

Fig.1 zeigt einen Geschwindigkeits-Regelkreis zum Regeln einer Geschwindigkeit eines Mehrkörpersystems MKS nach Stand der Technik. Beim zu regelnden Mehrkörpersystem MKS wird im gezeigten Fall von einem Zweikörpersystem mit zwei Körpern $J_A$, $J_R$ ausgegangen. Bereits an dieser Stelle sei angemerkt, dass ein Mehrkörpersystem MKS, welches mittels eines wie in Fig.1 gezeigten Geschwindigkeits-Regelkreises geregelt wird, auch mehr als zwei Körper $J_A$, $J_R$ aufweisen kann, und zum Beispiel als Drei-, Vier- oder Fünfkörpersystem gegeben sein kann.

Ein Mehrkörpersystem MKS wie das in Fig.1 gezeigte kann ein rotatorisches oder ein translatorisches Mehrkörpersystem MKS sein, also ein Mehrkörpersystem MKS, dessen Körper $J_A$, $J_R$ translatorische Bewegungen oder rotatorische Bewegungen ausführen. Es ist dabei auch möglich, dass sich ein Körper des Mehrkörpersystems MKS rotatorisch bewegt und ein anderer Körper translatorisch. Im Zuge der nachfolgenden Ausführungen wird demzufolge auf die generischen Begriffe "Körper", "Geschwindigkeit", "Kraft", "Wellenkraft" usw. zurückgegriffen. In Bezug auf rotatorische Mehrkörpersysteme MKS sollen damit aber ebenso die analogen Begriffe "Trägheit", "Drehzahl" bzw. "Winkelgeschwindigkeit", "Drehmoment", "Wellenmoment" usw. umfasst sein. Als konkrete Beispiele von Mehrkörpersystemen MKS können unter anderem Antriebsachsen von Werkzeugmaschinen, Antriebsstränge, Prüfstände mit einer Belastungsmaschine und einem über eine mechanische Welle mit der Belastungsmaschine verbundenen Prüfling (z.B. ein zu prüfender Verbrennungsmotor), Druckwalzen oder andere Mehrkörpersystems MKS genannt werden.

Konkret umfasst das in Fig. 1 gezeigte Mehrkörpersystems MKS einen Antriebs-Körper $J_A$ und einen mit dem Antriebs-Körper Ja, mechanisch gekoppelten Reibungs-Körper $J_R$. Die mechanische Kopplung des Antriebs-Körpers $J_A$ und des Reibungs-Körpers $J_R$ erfolgt im gegenständlichen Fall über ein Feder-Element c und über ein Dämpfer-Element d (entsprechend der üblichen Bezeichnung von Steifigkeit mit "c" bzw. Dämpfung mit "d"). Das Feder-Element c und das Dämpfer-Element d bilden hierbei eine elastische, mechanische Welle. In bekannter Weise ergeben sich aus Relativbewegungen zwischen Antriebs-Körper Ja, und Reibungs-Körper $J_R$ über das Feder-Element c und das Dämpfer-Element d übertragene Wellenkräfte $F_W$, also über die von Feder-Element c und über das Dämpfer-Element d gebildete mechanische Welle übertragene Wellenkräfte Fw, welche wiederum in bekannter Weise die Bewegungen der Körper $J_A$, $J_R$ beeinflussen.

Für die nachfolgenden Ausführungen ist von Bedeutung, dass eine nicht vernachlässigbare Haftreibung $\mu$ auf den Reibungs-Körper $J_R$ wirkt. Eine Haftreibung $\mu$ kann aus den unterschiedlichsten Gründen, beispielsweise aus konstruktionsbedingten Gründen, auftreten. Aus ebenso vielfältigen Gründen kann die auf den Reibungs-Körper $J_R$ wirkende Haftreibung $\mu$ wesentlich stärker ausgeprägt sein als die Summe sämtlicher auf den Antriebskörper $J_A$ wirkender Reibungen, wovon nachfolgend auch ausgegangen wird.

Hinsichtlich Antriebs-Körper $J_A$ und mechanisch mit diesem gekoppelten Reibungs-Körper $J_R$ ist im gegenständlichen Zusammenhang wesentlich, dass lediglich auf den Antriebs-Körper $J_A$ eine von einem Regler, wie einem Geschwindigkeits-Regler $R_n$, bestimmbare Antriebskraft $F_A$ wirkt, jedenfalls aber nicht auf einen Reibungs-Körper $J_R$. Die Bewegung des Reibungs-Körpers $J_R$ wird damit lediglich von der über die mechanische Welle übertragene Wellenkraft $F_W$ sowie von der Haftreibung $\mu$ beeinflusst. Auch bei Ausgestaltungen mit Mehrkörpersystemen MKS mit mehr als zwei Körpern ist im Rahmen der gegenständlichen Patentanmeldung entscheidend, dass zumindest ein mit Haftreibung $\mu$ behafteter Körper nicht direkt durch eine Antriebskraft $F_A$ beeinflusst werden kann.

Entsprechend dem in Fig. 1 dargestellten Koppelplan wird je Körper $J_A$, $J_R$ eine Geschwindigkeit $V_A$, $V_R$ ermittelt. Zur Ermittlung von Geschwindigkeiten sind im Stand der Technik eine Vielzahl von Möglichkeiten bekannt, die einer Fachperson auf dem Gebiet der Antriebstechnik hinlänglich bekannt sind, z.B. durch die Verwendung von Gebern, wie Drehgebern oder translatorischen Gebern. Wie an späterer Stelle im Detail ausgeführt, spielt es für die gegenständliche Erfindung keine Rolle, wie eine im Geschwindigkeitsregelkreis verarbeitete Geschwindigkeit konkret ermittelt wird. Eine Geschwindigkeit kann im Rahmen der Erfindung direkt gemessen werden, z.B. durch einen Geschwindigkeitssensor, der unmittelbar ein Geschwindigkeitsmesssignal erzeugt und folglich keine weitere Bearbeitung eines von einem Sensor erzeugten Signals zur Ermittlung eines Geschwindigkeitsmesssignals mehr erforderlich macht. Eine Geschwindigkeit kann im Rahmen der Erfindung aber auch aus einem gemessenen Positionssignal z.B. durch Differentiation ermittelt werden, was in der Praxis einen häufigen Fall darstellt, oder sie kann unter Einsatz der aus der Regelungstechnik hinlänglich bekannten Beobachtertechnik aus anderen Signalen berechnet werden, z.B. aus gemessenen elektrischen Strömen oder Spannungen oder aus magnetischen Flüssen usw. In diesem Sinn kann die mit einem Messrauschen $n_v$ behaftete Mess-Geschwindigkeit $V_{mess}$ auch aus einem Messsignal eines der Körper $J_A$, $J_R$ des Mehrkörpersystems MKS ermittelt werden, vorzugsweise aus einer Mess-Position $x_{mess}$ oder aus einem anderen, insbesondere einem von einer Geschwindigkeit verschiedenen Messsignal.

Durch einen Schalter S kann bedarfsweise eine der beiden ermittelten Geschwindigkeiten $V_A$, $V_R$ für eine Rückführung im Regelkreis ausgewählt werden, was den in der Praxis vielfach gegebenen Fall repräsentiert, dass von mehreren Körpern eines zu regelnden Mehrkörpersystems MKS Messwerte zur Verfügung stehen, z.B. Geschwindigkeits-Messwerte und/oder Positions-Messwerte, wobei in einer Regelung des Mehrkörpersystems MKS letztlich nur Messwerte eines einzelnen Körpers herangezogen werden können. Vielfach wird dabei von "2-Geber-Systemen" oder "Mehr-Geber-Systemen" gesprochen, was im Rahmen der gegenständlichen Ausführungen jedoch unerheblich ist. Insbesondere ist es im Rahmen der Erfindung auch denkbar, dass nur die Geschwindigkeit eines Körpers des Mehrkörpersystems MKS ermittelt wird. Im letzten Fall wäre natürlich auch kein Schalter S erforderlich.

Im gegenständlichen Kontext ist weiters von Bedeutung, dass eine gemessene bzw. ermittelte Geschwindigkeit wie in der Praxis üblich mit Messrauschen $n_v$ behaftet ist. In Fig. 1 ist die Überlagerung der Geschwindigkeiten $V_A$, $V_R$ durch Messrauschen $n_v$ anhand von Summationsstellen im Signalpfad der Geschwindigkeitsmessung angedeutet. Die mit Messrauschen $n_v$ behaftete Mess-Geschwindigkeit $V_{mess}$ ergibt sich damit zu $V_{mess} = V_{A,R} + n_v$, je nachdem, welche der Geschwindigkeiten $V_A$, $V_R$ ausgewählt wird. Unter Messrauschen $n_v$ wird hierbei eine Störgröße mit breitem unspezifischem Frequenzspektrum aufgefasst. Die Ursachen für Messrauschen $n_v$ sind einer Fachperson hinlänglich bekannt, und können beispielsweise auf thermische Einflüsse (Wärmerauschen, Johnson-Nyquist-Rauschen), Stromschwankungen (Schrotrauschen, Schottky-Rauschen) oder elektromagnetische Einstreuungen zurückzuführen sein. Die konkrete Form des Messrauschens ist im Rahmen der gegenständlichen Ausführungen unerheblich. Die nachfolgend beschriebene Erfindung kann demnach bei verschiedensten Rauscharten angewandt werden, wobei auch die Frequenzcharakteristik (weißes Rauschen, rosa Rauschen, usw.) keine Rolle spielt.

Eine mit Messrauschen $n_v$ überlagerte Geschwindigkeit $V_A$, $V_R$ wird im in Fig. 1 gezeigten Fall in weiterer Folge einem Geschwindigkeits-Regler $R_n$ als Ist-Geschwindigkeit $v_{ist}$ des Mehrkörpersystems MKS zugeführt. Die Ist-Geschwindigkeit $v_{ist}$ entspricht im in Fig.1 gezeigten Fall also der mit Messrauschen $n_v$ behafteten Mess-Geschwindigkeit $V_{mess}$. Der Geschwindigkeits-Regler $R_n$ ermittelt aus der Ist-Geschwindigkeit $v_{ist}$ sowie aus einer vorgegebenen Soll-Geschwindigkeit $v_{soll}$ eine Stellgröße Fs zum Einregeln der Ist-Geschwindigkeit $v_{ist}$ auf die Soll-Geschwindigkeit $v_{soll}$. Dabei ist anzumerken, dass bekanntermaßen nicht unmittelbar die vom Geschwindigkeits-Regler $R_n$ bestimmte Stellgröße Fs auf das Mehrkörpersystem MKS wirkt, konkret auf den Antriebskörper $J_A$, und letztlich die zu regelnde Geschwindigkeit beeinflusst, sondern dass die vom Geschwindigkeits-Regler $R_n$ ermittelte Stellgröße Fs noch von einem Aktuator A in eine entsprechende Leistungsgröße $F_A$, also in eine reale (Antriebs-)Kraft, ein reales Drehmoment, einen realen Strom, wie einem realen Antriebsstrom $i_A$ zur Ausbildung einer geforderten Antriebskraft, etc. umgewandelt wird.

Zur praktischen Implementierung kann ein Geschwindigkeits-Regler $R_n$ auf geeigneter mikroprozessorbasierter Hardware, die vorzugsweise eine Steuereinheit bildet, wie beispielsweise auf einem Mikrocontroller, oder in einer integrierten Schaltung (ASIC, FPGA) realisiert werden. Auch für einen Aktuator A zur Umsetzung einer Stellgröße Fs (Informationssignal) in eine Antriebskraft Fa, (Leistungssignal) bietet der Stand der Technik eine Vielzahl von Möglichkeiten, wie Servomotoren oder Elektromotoren im Allgemeinen (Asynchronmotor, Synchronmotor, Schrittmotor), Linearmotoren, hydraulische Aktuatoren usw. Wie bei von Servomotoren angetriebenen Mehrkörpersystemen MKS üblich, kann dabei z.B. ein Körper des Mehrkörpersystems MKS ein Bestandteil des Servomotors sein, beispielsweise dessen Rotor. Die genannte mikroprozessorbasierter Hardware zur Implementierung von Reglern usw. kann hierbei ebenfalls Teil des Servomotors sein und mit den genannten Sensoren bzw. bzw. Gebern bzw. Drehgebern verkabelt sein. Diese Zusammenhänge sind der Fachperson auf dem der Regelungs- und/oder Antriebstechnik hinlänglich bekannt, weswegen an dieser Stelle auf dahingehende Spezifika nicht näher eingegangen wird.

Um in weiterer Folge das von der gegenständlichen Erfindung gelöste Problem näher zu erläutern, ist in Fig.2 zunächst eine topologische Änderung des in Fig.1 gezeigten Mehrkörpersystems MKS dargestellt, die insbesondere bei verschwindenden Soll-Geschwindigkeiten auftreten kann. Verschwindende Soll-Geschwindigkeiten $v_{soll}=0$ können sich aus den unterschiedlichsten Gründen während des Betriebs eines Mehrkörpersystems MKS ergeben, beispielsweise durch eine Vorgabe eines Bedieners oder durch ein vorgegebenes Sollwertprofil. Im Zuge einer sogenannten Stillstandsregelung wird eine verschwindende Soll-Geschwindigkeit $v_{soll}=0$ wiederum bewusst gewählt, um das Mehrkörpersystem MKS in den Stillstand zu überführen und dort für zumindest eine vorgegebene Zeitdauer zu halten, was beispielsweise bei Ein- und/oder Ausschaltvorgängen erforderlich sein kann.

Wie bereits an früherer Stelle ausgeführt, führen eine verschwindende Soll-Geschwindigkeit $v_{soll}=0$ und eine verschwindende Ist-Geschwindigkeit von $v_{ist}=0$ typischerweise zu ebenfalls verschwindenden, vom Geschwindigkeits-Regler $R_n$ geforderten Stellgrößen Fs=0. Im Fall eines Geschwindigkeits-Regler $R_n$, der als P-Regler mit der Reglerverstärkung kv ausgeführt ist, würde sich beispielsweise $F_s=k_v*(v_{soll}-v_{ist})=0$ ergeben.

Ist die Ist-Geschwindigkeit $v_{ist}$ allerdings mit Messrauschen $n_v$ überlagert, fluktuiert die Ist-Geschwindigkeit $v_{ist}$ zwischen geringfügig von Null verschiedenen Werten, was von Null verschiedene Stellgrößen $F_S=-k_v*n_v$, von Null verschiedene Antriebskräfte Fa, und letztlich von Null verschiedene, über die mechanische Welle übertragene Wellenkräfte $F_W$ zur Folge hat.

Wirkt nun auf den Reibungs-Körper $J_R$ des Mehrkörpersystems MKS eine von der Wellenkraft $F_W$ nicht überwundene Haftreibung $\mu$, kann der Reibungs-Körper $J_R$ trotz einer von Null verschiedenen Antriebskraft $F_A$ und trotz einer von Null verschiedenen Wellenkraft $F_W$ im Stillstand verbleiben. Aus Sicht des Geschwindigkeits-Reglers $R_n$ verhält sich der Reibungs-Körper $J_R$ damit wie ein Körper mit unendlich hoher Trägheit bzw. unendlich hoher Masse. Das Mehrkörpersystem MKS degeneriert damit zu einem gefesselten Einkörpersystem, wie in Fig.2 dargestellt.

Eine derart signifikante Änderung des zu regelnden Mehrkörpersystems MKS kann zu Problemen bezüglich der Stabilität eines wie in Fig.1 gezeigten Regelkreises führen. Insbesondere wenn der Geschwindigkeits-Regler $R_n$ auf Basis der ursprünglichen, im Normalbetrieb, also abseits des Stillstandes, anzunehmenden Trägheit des Reibungs-Körpers ausgelegt wird, ergibt sich im Stillstand eine signifikante Abweichung zwischen Modellannahme für die Reglerauslegung und realem Verhalten.

Ein auf Basis obiger Ausführungen eintretender Stabilitätsverlust kann sich auf unterschiedliche Weise äußern, beispielsweise durch sogenannte Grenzzyklen: Das geregelte Mehrkörpersystem MKS verliert die Stabilität im Stillstand und schwingt sich auf, d.h. Stellgröße Fs, Antriebskraft $F_A$ und zu regelnde Geschwindigkeit $v_{ist}$ wachsen, bis die Wellenkraft $F_W$ die auf den Reibungskörper $J_R$ wirkende Haftreibung $\mu$ überschreitet. Das Mehrkörpersystem MKS verhält sich daraufhin wieder wie ursprünglich angenommen, also als freies Zweikörpersystem, wodurch erneut Stabilität hergestellt ist. Bleibt die Vorgabe einer verschwindenden Soll-Geschwindigkeit $v_{soll}=0$ jedoch unverändert, überführt der Geschwindigkeits-Regler $R_n$ das Merhkörpersystem MKS wieder in den Stillstand, mit der erneuten Folge eines Stabilitätsverlustes. Dieses Verhalten ist aus offensichtlichen Gründen unerwünscht, und äußert sich z.B. in Form von Lärm, thermischer Erwärmung und starker mechanischer Belastung der Mechanik.

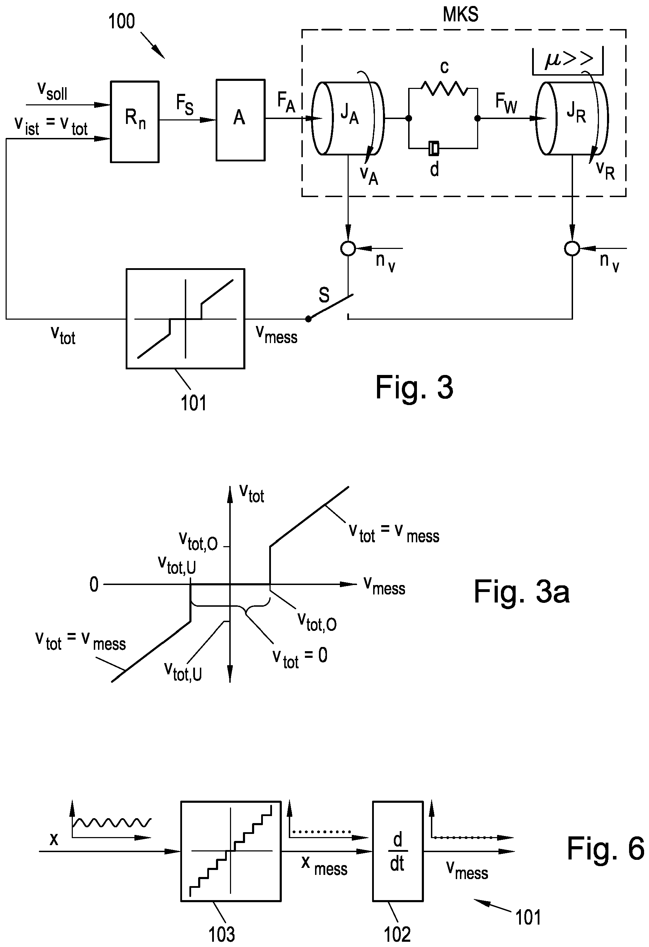

Insbesondere das beschriebene Problem des Stabilitätsverlustes wird durch die gegenständliche Erfindung vermieden, wie nachfolgend anhand von Fig.3 erläutert wird. Fig.3 zeigt einen erfindungsgemäßen Geschwindigkeits-Regelkreis 100, welcher ebenso ein wie im Rahmen von Fig.1 diskutiertes Mehrkörpersystem MKS in Form eines Zweikörpersystems regelt. Sämtliche zu Fig.1 vorgebrachten Ausführungen bezüglich Mehrkörpersystem MKS, Antriebs-Körper $J_A$, Reibungs-Körper $J_R$, Geschwindigkeits-Regler $R_n$, Messung der Geschwindigkeit $v_A$, $v_R$, Haftreibung $\mu$, Realisierung von Reglern usw. sind hinsichtlich Fig.3 unverändert gültig.

Der in Fig.3 gezeigte, erfindungsgemäße Geschwindigkeits-Regelkreis 100 unterscheidet sich vom in Fig.1 gezeigten Regelkreis durch ein im Rückführpfad für die gemessene Geschwindigkeit vorgesehenes Totzonen-Element 101. Mittels des erfindungsgemäßen Geschwindigkeits-Regelkreises 100 ist vorgesehen, eine Geschwindigkeit eines der Körper $J_A$, $J_R$ des Mehrkörpersystems MKS als mit einem Messrauschen $n_v$ behaftete Mess-Geschwindigkeit $v_{mess}$ zu messen und dem Totzonen-Element 101 zuzuführen. Erfindungsgemäß wird mithilfe des Totzonen-Elementes 101 des Mehrkörpersystems MKS sichergestellt, dass die Totzonen-Geschwindigkeit $v_{tot}$ für Werte der Mess-Geschwindigkeit $v_{mess}$ über Null und unter einem positiven Totzonen-Grenzwert vtot,o den Wert Null und für Werte der Mess-Geschwindigkeit $v_{mess}$ über dem positiven Totzonen-Grenzwert $v_{tot,O}$ den Wert der Mess-Geschwindigkeit $v_{mess}$ annimmt.

Um hierbei sicherzustellen, dass der destabilisierende Einfluss von Messrauschen $n_v$ unterdrückt wird, ist der positive Totzonen-Grenzwert $v_{tot,O}$ größer als ein vorgegebener oder bekannter Maximalwert des Messrauschen $n_v$ der Mess-Geschwindigkeit $v_{mess}$ zu wählen. Um die Beeinflussung des Regelkreises 100 durch das Totzonen-Element dennoch möglichst gering zu halten, kann der positive Totzonen-Grenzwert $v_{tot,O}$ jedoch kleiner als das hundertfache des Maximalwertes des Messrauschen $n_v$, oder kleiner als das zehnfache des Maximalwertes des Messrauschen $n_v$ gewählt werden, oder bevorzugt kleiner als das fünffache des Maximalwertes des Messrauschen $n_v$ gewählt werden, oder besonders bevorzugt kleiner als das zweifache des Maximalwertes des Messrauschen $n_v$ gewählt werden. Die vom Totzonen-Element 101 ausgegebene Totzonen-Geschwindigkeit $v_{tot}$ wird in weiterer Folge dem Geschwindigkeits-Regler $R_n$ als Ist-Geschwindigkeit $v_{ist}$ zum Regeln zugeführt.

Der Maximalwert des Messrauschen $n_v$ ist für einen bestimmten Geber oder Drehgeber oder Messsensor oder allgemein für eine bestimmte Geschwindigkeitsermittlungseinheit zur Messung bzw. Ermittlung der Geschwindigkeit bekannt, beispielsweise aus einem Datenblatt, oder kann zumindest messtechnisch ermittelt werden.

Durch das erfindungsgemäße Totzonen-Element 101 wird der Geschwindigkeits-Regelkreis 100 in Stillstandsphasen aufgetrennt. Da damit im Stillstand keine geschlossene Regelschleife mehr vorhanden ist, kann folglich auch keine geschlossene Regelschleife mehr vorliegen, die gemäß den vorstehenden Ausführungen ihre Stabilität verliert. Das erfindungsgemäße Totzonen-Element 101 löst damit auf einfache wie effektive Weise das geschilderte Stabilitätsproblem.

Eine Folge der erfindungsgemäßen Vorgehensweise ist allerdings, dass der im Geschwindigkeits-Regelkreis 100 vorgesehene Geschwindigkeits-Regler $R_n$ während der Stillstandsphasen in einem Vorwärtszweig ohne Rückkopplung wirkt. Aus regelungstechnischen Gründen (wie insbesondere zur Gewährleistung der BIBO-Stabilität des Vorwärtszweiges, "Bounded-Input-Bounded-Output-Stabilität") kann es hierbei von Vorteil sein, Regelgesetze ohne Integralanteil als Geschwindigkeits-Regler $R_n$ einzusetzen. Als dahingehende Beispiele können Sliding-Mode-Regler, oder Backstepping-Regler, oder modellprädiktive Regler, oder P-Regler, oder flachheitsbasierte Regler genannt werde. Für die Umsetzung der gegenständlichen Erfindung spielt die konkrete Wahl des Regelgesetzes jedoch keine Rolle. Auch eine Umschaltung des Regelgesetzes im Geschwindigkeits-Regler $R_n$ während der Stillstandsphasen zu einem Regelgesetz ohne Integralanteil ist grundsätzlich denkbar.

In der Praxis treten vielfach Situationen ein, in denen positive wie negative Geschwindigkeiten auftreten, z.B. sich in eine positive und in eine negative Richtung bewegende bzw. sich in eine positive und in eine negative Drehrichtung drehende Körper. In derartigen Fällen kann in einer bevorzugten Weise im Totzonen-Element 101 ein negativer Totzonen-Grenzwert $v_{tot,U}$ vorgesehen werden, wobei der Betrag des negativen Totzonen-Grenzwertes $v_{tot,O}$ größer als ein vorgegebener Maximalwert des Messrauschen $n_v$ der Mess-Geschwindigkeit $v_{mess}$ gewählt wird, sodass die Totzonen-Geschwindigkeit $v_{tot}$ für zwischen dem negativen Totzonen-Grenzwert $v_{tot,U}$ und dem positiven Totzonen-Grenzwert $v_{tot,O}$ liegende Werte der Mess-Geschwindigkeit $v_{mess}$ den Wert Null annimmt und für unter dem negativen Totzonen-Grenzwert $v_{tot,U}$ liegende und für über dem positiven Totzonen-Grenzwert $v_{tot,O}$ liegende Werte der Mess-Geschwindigkeit $v_{mess}$ annimmt. In diesem Fall sind zur Parametrierung des Totzonen-Elements 101 zwei Parameter erforderlich, ein negativer Totzonen-Grenzwert $v_{tot,U}$ und der positive Totzonen-Grenzwert $v_{tot,O}$. Die Charakteristik eines derartigen Totzonen-Elementes 101 ist in Fig.3a dargestellt.

Um auch in dieser Ausgestaltung die Beeinflussung des Regelkreises 100 durch das Totzonen-Element möglichst gering zu halten, kann der negative Totzonen-Grenzwert $v_{tot,U}$ jedoch größer als das minus-hundertfache des Maximalwertes des Messrauschen $n_v$, oder grö-

ßer als das minus-zehnfache des Maximalwertes des Messrauschen $n_v$ gewählt werden, oder größer als das minus-fünffache des Maximalwertes des Messrauschen $n_v$ gewählt werden, oder größer als das minus-zweifache des Maximalwertes des Messrauschen $n_v$ gewählt werden.

In einer vorteilhaften Ausgestaltung der gegenständlichen Erfindung kann das Totzonen-Element 101 dabei symmetrisch ausgestaltet werden, indem für die negative Totzonen-Geschwindigkeit $v_{tot,U}$ und die positive Totzonen-Geschwindigkeit $v_{tot,O}$ Werte mit zwar unterschiedlichem Vorzeichen, aber mit gleichem Betrag herangezogen werden.

In anderen für die Praxis relevanten Fällen, z.B. bei Anwendungen auf (Motor-)Prüfständen, kann es wiederum vorteilhaft sein, sämtliche negativen Mess-Geschwindigkeiten $v_{mess}$ auf den Wert Null abzubilden. Im Rahmen der gegenständlichen Erfindung kann das erreicht werden, indem der Totzonen-Geschwindigkeit $v_{tot}$ für sämtliche unter dem positiven Totzonen-Grenzwert $v_{tot,O}$ liegende Werte der Mess-Geschwindigkeit $v_{mess}$ der Wert Null zugewiesen wird.

Es sei angemerkt, dass das erfindungsgemäß vorgesehene Totzonen-Element 101 nicht durch einen wie auch immer gearteten Filter, wie z.B. einen Tiefpassfilter oder einen Hochpassfilter oder einen Bandpassfilter, ersetzt werden kann. Um das beschriebene Stabilitätsproblem lösen zu können, ist wesentlich, dass das in der Mess-Geschwindigkeit $v_{mess}$ enthaltene Messrauschen $n_v$ zur Gänze eliminiert wird. Ein wie oben genannter Filter kann typischerweise nicht sicherstellen, dass ganze Frequenzbänder (Rauschen erstreckt sich üblicherweise auf eine Vielzahl von Frequenzen, also auf ausgedehnte Frequenzbänder) eliminiert werden, d.h. dass ganze Frequenzbänder durchgehend mit einer Verstärkung von Null verstärkt werden. Dennoch kann es in der praktischen Anwendung der Erfindung vorteilhaft sein, die Totzonen-Geschwindigkeit $v_{tot}$ vor der Verwendung im Geschwindigkeits-Regler zur Ermittlung der Soll-Antriebskraft $F_s$ einer Filterung, z.B. einer Tiefpassfilterung, zu unterziehen, was aber in der Auslegung des Reglers bzw. des gesamten Regelkreises begründet liegt, und nicht im Zusammenhang mit dem gegenständlichen Stabilitätsproblem steht.

Das Totzonen-Element 101 wird wie beschrieben im Rückführzweig des Geschwindigkeits-Regelkreis 100 vorgesehen und ist mit Hilfe zumindest eines Parameters, konkret zumindest durch den positiven Totzonen-Grenzwert $v_{tot,O}$, konfigurierbar. Wie nachstehend detailliert ausgeführt wird, kommt der Parametrierung bzw. Konfiguration des erfindungsgemäßen Totzonen-Element 101 wesentliche Bedeutung zu.

Sind entsprechend den vorhergehenden Ausführungen eine negative Totzonen-Geschwindigkeit $v_{tot,U}$ und eine positive Totzonen-Geschwindigkeit $v_{tot,O}$ als Parameter des Totzonen-Elements 101 vorgesehen, kann, wie erwähnt, als untere Grenze für den Betrag dieser Parameter ein Maximalwert von einem die zu regelnde Geschwindigkeit n überlagerndem Messrauschen $n_v$ gewählt werden. Um wiederum diesen Maximalwert des Messrauschens $n_v$ zu ermitteln, können in einer besonders vorteilhaften Ausgestaltung der Erfindung eine oder mehrere Identifikationsmessungen durchgeführt werden, vorzugsweise im Stillstand des Mehrkörpersystems MKS.

Im Zuge einer Identifikationsmessung im Stillstand des Mehrkörpersystems MKS, vorzugsweise vor Beginn des Betriebes des Mehrkörpersystems MKS, also vorzugsweise vor Beginn der Geschwindigkeits-Regelung des Mehrkörpersystems MKS, kann während eines vorgegebenen Identifikations-Messintervalls der zeitliche Verlauf der Mess-Geschwindigkeit $v_{mess}$ aufgezeichnet und der betragsmäßig größte Wert des aufgezeichneten zeitlichen Verlaufs der Mess-Geschwindigkeit $v_{mess}$ als Maximalwert des Messrauschens $n_v$ der Mess-Geschwindigkeit $v_{mess}$ identifiziert werden. Es kann auch der größte positive Wert oder der größte negative Werte des aufgezeichneten zeitliche Verlaufs der Mess-Geschwindigkeit $v_{mess}$ als Maximalwert des Messrauschens $n_v$ der Mess-Geschwindigkeit $v_{mess}$ identifiziert werden.

In einer weiteren vorteilhaften Ausgestaltung der Erfindung kann eine Identifikationsmessung aber auch im Betrieb des Geschwindigkeits-Regelkreises, also im Betrieb des Mehrkörpersystems MKS, durchgeführt werden. Vorzugsweise werden dabei im Betrieb des Mehrkörpersystems MKS auftretende Stillstandsphasen detektiert und als Identifikations-Messintervalle zur Identifikation eines Maximalwertes des Messrauschens $n_v$ herangezogen. Auf diese Weise kann sichergestellt werden, dass die zur Parametrierung des Totzonen-Elements 101 herangezogenen Totzonen-Grenzwerte $v_{tot,O}$, $v_{tot,U}$ stets an aktuelle Maximalwerte des Messrauschens $n_v$ angepasst sind. Ebenso können die Totzonen-Grenzwerte $v_{tot,O}$, $v_{tot,U}$ aber auch vorgegeben werden, z.B. durch einen Bediener, oder z.B. aus einer Datenblattangabe eines Drehgebers eruiert oder aus einer Tabelle ausgelesen werden. Eine derartige Tabelle kann auf der mikroprozessorbasierten Hardware, auf der z.B. das Totzonen-Element 101 und der Geschwindigkeits-Regler $R_n$ implementiert sind, abgespeichert sein.

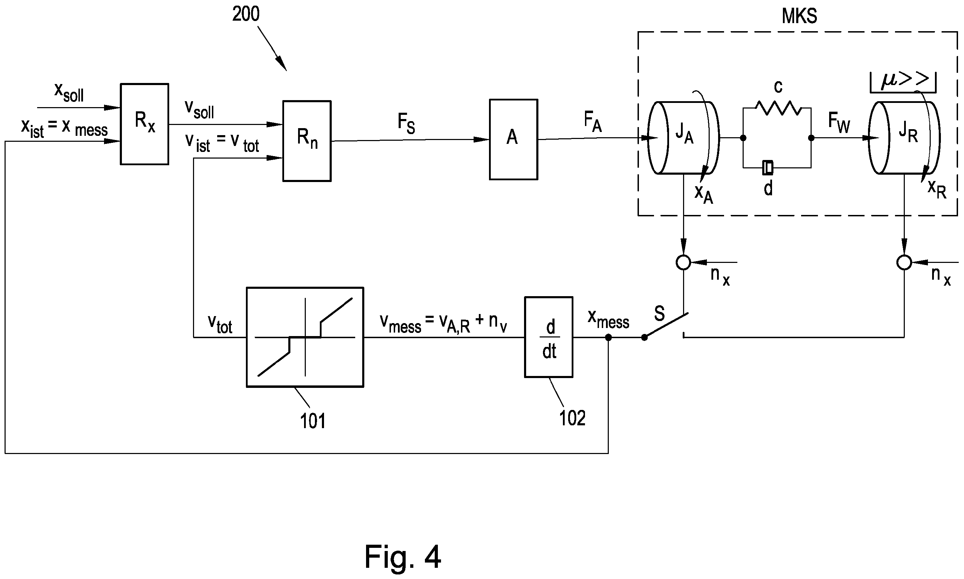

Ein Geschwindigkeits-Regelkreis 100, wie anhand Fig.1 und Fig.2 diskutiert, kann bekanntermaßen nicht nur dazu eingesetzt werden, ausschließlich eine Geschwindigkeit v zu regeln. Ein Geschwindigkeits-Regelkreis 100 kann vielmehr auch Bestandteil eines umfassenderen Regelungskonzeptes sein, beispielsweise Bestandteil eines kaskadierten Positionsregelkreises 200, in dem der Geschwindigkeits-Regelkreis 100 als unterlagerter Regelkreis Geschwindigkeits-Sollwerte $V_{soll}$ umsetzt, die von einem überlagerten Positions-Regler $R_x$ vorgegeben werden. Ein derartiger Positionsregelkreis 200, für den die vorstehenden Ausführungen zu Mehrkörpersystem MKS, Aktuator A, Geschwindigkeits-Regler $R_n$ ebenso vollumfänglich gültig sind, ist in Fig.4 gezeigt. Konkret kann ein Positions-Regler $R_x$ dabei aus

einer vorgegebenen Soll-Position $x_{soll}$ und aus einer Ist-Position $x_{ist}$ die dem Geschwindigkeits-Regler $R_n$ vorgegebene Soll-Geschwindigkeit $V_{soll}$ zum Regeln der Ist-Geschwindigkeit $v_{ist}$ ermitteln. Für den Fall eines Positionsregelkreises 200, bei dem sowohl als Positionsregler $R_x$ als auch als Geschwindigkeitsregler $R_n$ P-Regler eingesetzt werden, und bei dem die Aktuatordynamik des Aktuators A in hinreichender Genauigkeit als PT1-Glied beschrieben werden kann, wurde beispielsweise erkannt, dass die Regler-Verstärkung $k_p$ des Positionsreglers $R_x$ im Stillstand, wenn also das Zweikörpersystem zu einem gefesselten Einkörpersystem degeneriert, die sehr restriktive Gleichung

$$k_p < \frac{d}{J_A}$$

erfüllen müsste (mit Dämpfung der mechanischen Kopplung d und Trägheit des Antriebs-Körpers $J_A$), um auch ohne erfindungsgemäßes Totzonen-Element 101 Stabilitätsprobleme zu vermeiden. Die gegenständliche Erfindung kann in vorteilhafter Weise auch in einem derartigen Szenario und ohne die Einschränkung auf die Regler-Verstärkung $k_p$ des Positionsreglers $R_x$ eingesetzt werden.

Fig.4 stellt darüber hinaus einen weiteren wichtigen Aspekt der gegenständlichen Erfindung dar. In vielen praktisch relevanten Fällen so wie in der in Fig.4 gezeigten Situation werden Geschwindigkeiten nicht direkt gemessen, sondern es wird zunächst eine Positionsmessung vorgenommen, und aus der gemessenen Position durch Differentiation die interessierende Geschwindigkeit ermittelt. In Fig.4 werden die Positionen $x_A$, $x_R$ mittels eines Positionsgebers erfasst. Die erfassten Positions-Messsignale sind wie die bereits eingehend diskutierten Geschwindigkeiten mit Rauschen $n_x$ überlagert. Mittels des Schalters S wird erneut eines der Positions-Messsignale für eine Rückführung ausgewählt. Hierbei sei angemerkt, dass für eine Rückführung einer Position im Positionsregelkreis und für eine Ermittlung einer Geschwindigkeit im Geschwindigkeitsregelkreis, z.B. durch Differentiation, auch unterschiedliche Positions-Messsignale herangezogen werden können, wobei in gleicher Weise geeignete Schalter zur Auswahl der Positions-Messsignale vorgesehen sein können. So kann beispielsweise ein erstes Positions-Messsignal $x_A$ des Antriebs-Körpers $J_A$ zur Berechnung der Geschwindigkeit herangezogen werden, und ein zweites Positions-Messsignal $x_R$ des Reibungs-Körpers $J_R$ im Positionsregelkreis rückgeführt werden oder umgekehrt.

Die in Fig.4 dargestellte Variante verdeutlicht den bereits erwähnten Umstand, dass es im Rahmen der gegenständlichen Erfindung, unabhängig von der konkreten Ausgestaltung, nicht von Bedeutung ist, wie eine im Geschwindigkeitsregelkreis geregelte Geschwindigkeit tatsächlich ermittelt wird. So kann eine Geschwindigkeit mittels einer geeigneten Geschwindigkeits-Ermittlungseinheit, z.B. einem Geber oder einem Drehgeber direkt gemessen werden, oder ebenfalls in einer Geschwindigkeits-Ermittlungseinheit aus einem Positions-Messsignal bestimmt werden, z.B. durch Differentiation. Genauso ist es im Rahmen der Erfindung allerdings möglich, eine Geschwindigkeit durch Berechnung aus einem anderen oder mehreren anderen Signalen zu ermitteln, z.B. bei der Verwendung von elektrischen Maschinen als Aktuatoren aus gemessenen Strömen und/oder gemessenen Spannungen und/oder gemessenen magnetischen Flüssen. Zu diesem Zweck kann die aus der Regelungstechnik hinlänglich bekannte Beobachtertechnik eingesetzt werden, und beispielsweise ein Kalman-Filter oder ein Luenberger-Beobachter oder ein Sliding-Mode-Beobachter zur Ermittlung einer Geschwindigkeit eingesetzt werden.

Konkret wird das ausgewählte Positions-Messsignal in der in Fig.4 gezeigten Ausgestaltung in einem Differenzierer 102 differenziert, sodass wie im Fall ohne überlagerten Positionsregler $R_x$ eine mit Messrauschen $n_v$ behaftetes Mess-Geschwindigkeit $v_{mess}$ zur Geschwindigkeitsregelung entsteht. Aufgrund der Tatsache, dass das Totzonen-Element 101 lediglich im unterlagerten Geschwindigkeits-Regelkreis wirkt, führt die Erfindung in derartigen Szenarien zu keinerlei Beeinflussung von überlagerten Regelkreisen, wie dem gegenständlich überlagerten Positionsregelkreis 200.

Anknüpfend an die vorstehenden Ausführungen zeigt Fig.5 einen weiteren, insbesondere für die praktische Umsetzung wichtigen Aspekt der Erfindung. Fig.5 stellt dazu eine Serienschaltung von Blöcken dar, wie sie beispielsweise im Rahmen einer wie anhand von Fig.4 diskutierten Ausgestaltung zur Ermittlung von Geschwindigkeiten auftreten kann (wie in der Regelungstechnik üblich ist die konkrete Umsetzung von Messungen in den Koppelplänen aus Fig.1, Fig.3 und Fig.4 aus Gründen der Übersichtlichkeit nicht explizit dargestellt). Die in Fig.5 gezeigte Serienschaltung bildet eine Geschwindigkeits-Ermittlungseinheit. Unter Geschwindigkeits-Ermittlungseinheit ist im gegenständlichen Zusammenhang eine allgemeine Einheit zur Ermittlung von Geschwindigkeiten zu verstehen, die gemäß den vorstehenden Ausführungen einzig einen Geschwindigkeitssensor umfassen kann, genauso aber auch Sensoren zur Messung von anderen Signalen und z.B. einen Beobachter zur Berechnung der interessierenden Geschwindigkeit aus diesen anderen Signalen. Das Totzonen-Element 101 ist damit im beispielhaften, in Fig.5 gezeigten Fall Bestandteil der Geschwindigkeits-Ermittlungseinheit. Ein Totzonen-Element 101 kann aber natürlich auch außerhalb einer Geschwindigkeits-Ermittlungseinheit angeordnet sein.

In der in Fig.5 gezeigten, beispielhaften Geschwindigkeits-Ermittlungseinheit ist zunächst ein Quantisierungselement 103 dargestellt. Das Quantisierungselement 103 repräsentiert die bei einer Erzeugung von digitalen Messwerten unvermeidliche Quantisierung. Konkret erzeugt das Quantisierungselement 103 aus einem Sensorsignal x, welches beispielsweise durch photoelektrische Abtastung eines sich mit einem Körper $J_A$, $J_R$ des Mehrkörpersystems MKS mitbewegenden Gitters (vgl. z.B. EP 3355032 B1) erzeugt wurde, ein quantisiertes Positionsmesssignal $x_{mess}$. Hierbei wird angenommen, dass das für den gegenständlichen Zusammenhang wesentliche Messrauschen $n_x$ bereits auf das Sensorsignal x wirkt und eine Schwingung im Sensorsignal x herbeiführt.

Wird nun ein Quantisierungselement 103 mit hoher Auflösung, d.h. mit kleinen Quantisierungsstufen, eingesetzt, wird die Schwingung im Sensorsignal x nicht blockiert und beinahe unverändert auf das Positionsmesssignal $x_{mess}$ abgebildet. Durch das nachfolgende Differenzieren zur Erzeugung der Mess-Geschwindigkeit $v_{mess}$ im Block 102 wird die durch das Rauschen verursachte Schwingung weiter verstärkt und bleibt so natürlich auch Bestandteil der Mess-Geschwindigkeit $v_{mess}$. Es kommt wie in den vorstehenden Ausführungen zur Ausbildung einer mit Messrauschen $n_v$ behafteten Mess-Geschwindigkeit $v_{mess}$. Erst das nachgeschaltete Totzonen-Element führt zur Unterdrückung dieser durch das Rauschen $n_x$ verursachten Signalanteile, was die gewünschte Stabilisierung des Regelkreises herbeiführt.

Wird nun jedoch, wie in Fig.6 gezeigt, ein Quantisierungselement 103 eingesetzt, das im Vergleich zum Quantisierungselement 103 aus Fig.5 eine wesentlich schlechtere Auflösung bzw. wesentlich gröbere, z.B. um den Faktor 2 oder um den Faktor 5 oder um den Faktor 10 gröbere, Quantisierungsstufen aufweist, wird die durch das Messrauschen $n_x$ im Sensorsignal x verursachte Schwingung unterdrückt. Das bedeutet, dass der Effekt des erfindungsgemäßen Totzonen-Elements 101 durch ein Quantisierungselement 103 realisiert werden kann, welches bewusst mit einer besonders großen Quantisierung ausgestattet wird, vorzugsweise mit Quantisierungsstufen, die größer als ein vorgegebener Maximalwert eines Messrauschens $n_v$ gewählt werden. Gemäß Fig.6 wird das erfindungsgemäße Totzonen-Element 101 als Serienschaltung eines Quantisierungselements 103 mit schlechter, d.h. großer Auflösung, also mit einer Auflösung, die das wirkende Messrauschen $n_x$ unterdrückt, und einem Differenzierer 102 umgesetzt werden. Steht ein Geschwindigkeitssensor (Drehgeber) zur Verfügung, der direkt Geschwindigkeits-Messwerte bereitstellt, kann natürlich auch für einen Geschwindigkeitssensor eine bewusst große Auflösung vorgesehen werden, um wie beschrieben den destabilisierenden Effekt von Messrauchen zu unterdrücken. Alternativ formuliert implementiert das erfindungsgemäße Totzonen-Element in der Ausgestaltung gemäß Fig.6 eine Quantisierung eines Messsignals, wobei die Quantisierung des Messsignals größer ist als der Maximalwert eines Messrauschens, vorzugsweise eines Messrauschens der Mess-Geschwindigkeit, sodass die quantisierte Mess-Geschwindigkeit $v_{mess}$ der Totzonen-Geschwindigkeit $v_{tot}$ entspricht.

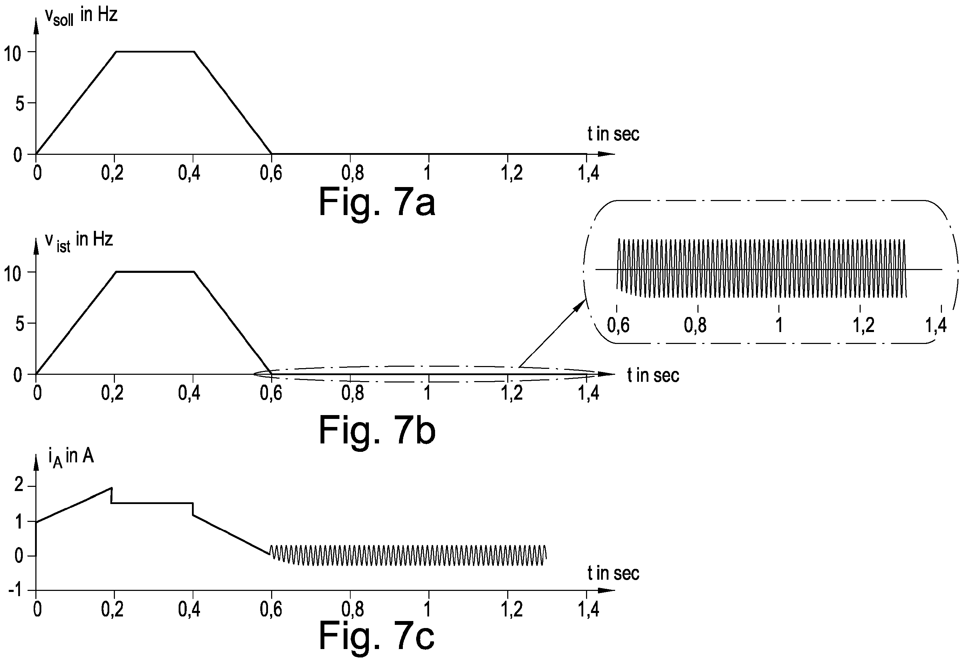

Fig.7 zeigt abschließend einen Grenzzyklus, wie er im Betrieb eines wie in Fig.1 gezeigten Geschwindigkeitsregelkreises nach Stand der Technik auftreten kann. Konkret zeigt Fig.7a zunächst einen vorgegebenen Zeitverlauf der Soll-Geschwindigkeit $v_{soll}$, in welchem zuerst eine rampenförmige Erhöhung sowie eine rampenförmige Absenkung der Soll-Geschwindigkeit $v_{soll}$ vorgesehen sind. Obwohl ab dem Zeitpunkt t=0.6 Sekunden eine Soll-Geschwindigkeit von $v_{soll}$=0 gefordert ist, kommt es aufgrund des eingehend geschilderten Stabilitätsproblems zu einer Schwingung, die einerseits in der in Fig.7b dargestellten Mess-Geschwindigkeit $v_{mess}$ ersichtlich ist und die sich andererseits auf den in Fig.7c gezeigten Antriebsstrom $i_A$ auswirkt. Der Antriebsstrom $i_A$ steht hierbei für einen kraftbildenden, elektrischen Strom, den der Aktuator A in Form einer elektrischen Maschine, z.B. einer Synchronmaschine oder einer Asynchronmaschine oder einer Reluktanzmaschine oder einer Gleichstrommaschine, ausbildet, um die vom übergeordneten Geschwindigkeitsregler $R_n$ geforderte Stellgröße umzusetzen.

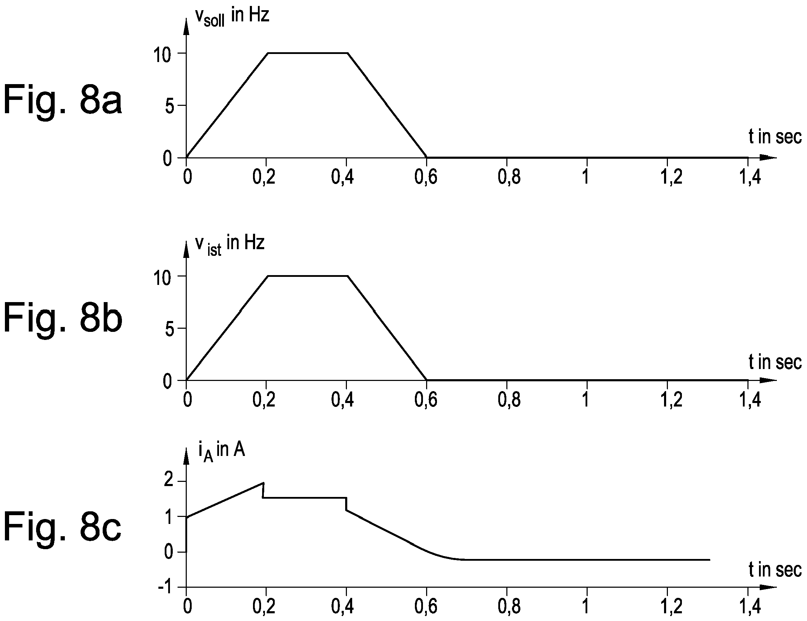

Die gegenständliche Erfindung erlaubt es, derartige unerwünschte Phänomene zu vermeiden, was in Fig.8 dargestellt ist. Das erfindungsgemäß eingefügte Totzonen-Element 101 ermöglicht es auf die beschriebene Weise, die Stabilität des

Geschwindigkeitsregelkreises durchgehend sicherzustellen und die anhand von Fig.7 beschriebene Schwingung bzw. den anhand von Fig.7 beschriebenen Grenzzyklus zu unterbinden. Das Resultat sind schwingungsfreie Zeitverläufe sowohl der Mess-Geschwindigkeit $v_{mess}$ als auch des genannten Stromes $i_A$.

Zusammengefasst geht mit der gegenständlichen Erfindung eine Reihe von für die Praxis wertvollen Vorteilen einher. So stellt die Erfindung eine einfache Möglichkeit dar, Grenzzyklen bei Antriebssystemen zu vermeiden. Das erfindungsgemäß vorgesehene Totzonen-Element 101 ist dabei einfach zu parametrieren, da typischerweise nicht mehr als zwei Parameter, bzw. bei einer symmetrischen Ausgestaltung des Totzonen-Element 101 sogar überhaupt nur ein Parameter festgelegt werden müssen. Weiters erfordert die Erfindung keine konstruktiven Änderungen am Mehrkörpersystem MKS, ist sowohl im Rahmen einer 1- als auch 2-Geber-Regelung einsetzbar, bringt keinen Genauigkeitsverlust in der Ist-Position mit sich, vermeidet eine akustische Beeinträchtigung und reduziert thermische Belastung der zur Umsetzung der von Geschwindigkeits-Reglern $R_n$ geforderten Stellgrößen eingesetzten Aktuatoren.

**Patentansprüche**

1. Verfahren zur Stillstandsregelung eines Mehrkörpersystems (MKS) umfassend zumindest einen Antriebs-Körper ($J_A$) und zumindest einen mit dem Antriebs-Körper ($J_A$) mechanisch gekoppelten Reibungs-Körper ($J_R$), wobei ein Geschwindigkeits-Regler ($R_n$) aus einer vorgegebenen Soll-Geschwin-

digkeit $v_{soll}$=0 und aus einer Ist-Geschwindigkeit ($v_{ist}$) des Mehrkörpersystems (MKS) eine Stellgröße (Fs) zum Einregeln der Ist-Geschwindigkeit ($v_{ist}$) auf die Soll-Geschwindigkeit ($v_{soll}$) ermittelt, wobei die Stellgröße (Fs) durch einen Aktuator (A) in eine auf den Antriebs-Körper ($J_A$) wirkende Antriebskraft ($F_A$) gewandelt wird und wobei auf den Reibungs-Körper ($J_R$) eine Haftreibung ($\mu$) wirkt, **dadurch gekennzeichnet, dass** eine Geschwindigkeit eines der Körper ($J_A$, $J_R$) des Mehrkörpersystems (MKS) als mit einem Messrauschen ($n_v$) behaftete Mess-Geschwindigkeit ($v_{mess}$) ermittelt und einem Totzonen-Element (101) zugeführt wird, wobei das Totzonen-Element (101) die Mess-Geschwindigkeit ($v_{mess}$) zu einer Totzonen-Geschwindigkeit ($v_{tot}$) wandelt, welche für Werte der Mess-Geschwindigkeit ($v_{mess}$) über einem Wert Null und unter einem positiven Totzonen-Grenzwert ($v_{tot,O}$) einen Wert Null und für Werte der Mess-Geschwindigkeit ($v_{mess}$) über dem positiven Totzonen-Grenzwert ($v_{tot,O}$) den Wert der Mess-Geschwindigkeit ($v_{mess}$) annimmt, wobei der positive Totzonen-Grenzwert ($v_{tot,O}$) größer als ein vorgegebener Maximalwert des Messrauschens ($n_v$) der Mess-Geschwindigkeit ($v_{mess}$) gewählt wird, **und dass** die Totzonen-Geschwindigkeit ($v_{tot}$) dem Geschwindigkeits-Regler ($R_n$) als Ist-Geschwindigkeit ($v_{ist}$) zugeführt wird.

2. Verfahren nach Anspruch 1, **dadurch gekennzeichnet, dass** im Totzonen-Element (101) ein negativer Totzonen-Grenzwert ($v_{tot,U}$) vorgesehen wird, wobei ein Betrag des negativen Totzonen-Grenzwertes ($v_{tot,O}$) größer als ein vorgegebener Maximalwert des Messrauschens ($n_v$) der Mess-Geschwindigkeit ($v_{mess}$) gewählt wird, sodass die Totzonen-Geschwindigkeit ($v_{tot}$) für zwischen dem negativen Totzonen-Grenzwert ($v_{tot,U}$) und dem positiven Totzonen-Grenzwert ($v_{tot,O}$) liegende Werte der Mess-Geschwindigkeit ($v_{mess}$) den Wert Null annimmt und für unter dem negativen Totzonen-Grenzwert ($v_{tot,U}$) liegende und für über dem positiven Totzonen-Grenzwert ($v_{tot,O}$) liegende Werte der Mess-Geschwindigkeit ($v_{mess}$) den Wert der Mess-Geschwindigkeit ($v_{mess}$) annimmt.

3. Verfahren nach Anspruch 2, **dadurch gekennzeichnet, dass** der negative Totzonen-Grenzwert ($v_{tot,U}$) und der positive Totzonen-Grenzwert ($v_{tot,O}$) den gleichen Betrag aufweisen.

4. Verfahren nach Anspruch 1, **dadurch gekennzeichnet, dass** das Totzonen-Element (101) die Mess-Geschwindigkeit ($v_{mess}$) zu einer Totzonen-Geschwindigkeit ($v_{tot}$) wandelt, welche für Werte der Mess-Geschwindigkeit ($v_{mess}$) unter dem Wert Null den Wert Null annimmt.

5. Verfahren nach einem der vorhergehenden Ansprüche, **dadurch gekennzeichnet, dass** die Totzonen-Geschwindigkeit ($v_{tot}$) tiefpassgefiltert wird, bevor sie dem Geschwindigkeits-Regler ($R_n$) als Ist-Geschwindigkeit ($v_{ist}$) zugeführt wird.

6. Verfahren nach einem der vorhergehenden Ansprüche, **dadurch gekennzeichnet, dass** der Maximalwert des Messrauschens ($n_v$) der Mess-Geschwindigkeit ($v_{mess}$) durch eine Identifikationsmessung im Stillstand des Mehrkörpersystems (MKS) ermittelt wird, wobei während eines vorgegebenen Identifikations-Messintervalls der zeitliche Verlauf der Mess-Geschwindigkeit ($v_{mess}$) aufgezeichnet wird und der betragsmäßig größte Wert des aufgezeichneten zeitlichen Verlaufs der Mess-Geschwindigkeit ($v_{mess}$) als Maximalwert des Messrauschens ($n_v$) der Mess-Geschwindigkeit ($v_{mess}$) ermittelt wird.

7. Verfahren nach Anspruch 6, **dadurch gekennzeichnet, dass** der Maximalwert des Messrauschens ($n_v$) der Mess-Geschwindigkeit ($v_{mess}$) in einer Stillstandsphase während des Betriebs des Mehrkörpersystems (MKS) neu ermittelt wird **und dass** der positive Totzonen-Grenzwert ($v_{tot,O}$) und/oder der negative Totzonen-Grenzwert ($v_{tot,U}$) an den neu ermittelten Maximalwert des Messrauschens ($n_v$) angepasst werden.

8. Verfahren nach Anspruch 6, **dadurch gekennzeichnet, dass** der Maximalwert des Messrauschens ($n_v$) der Mess-Geschwindigkeit ($v_{mess}$) in einer Stillstandsphase vor Betriebsbeginn des Mehrkörpersystems (MKS) ermittelt wird.

9. Verfahren nach einem der vorhergehenden Ansprüche, **dadurch gekennzeichnet, dass** ein Geschwindigkeits-Regler ($R_n$) ohne Integralanteil zum Einregeln der Ist-Geschwindigkeit ($v_{ist}$) verwendet wird.

10. Verfahren nach einem der vorhergehenden Ansprüche, **dadurch gekennzeichnet, dass** die mit einem Messrauschen ($n_v$) behaftete Mess-Geschwindigkeit ($v_{mess}$) direkt gemessen wird.

11. Verfahren nach einem der Ansprüche 1 bis 9, **dadurch gekennzeichnet, dass** die mit einem Messrauschen ($n_v$) behaftete Mess-Geschwindigkeit ($v_{mess}$) aus einem Messsignal, vorzugsweise einer Mess-Position ($x_{mess}$), von einem der Körper ($J_A$, $J_R$) des Mehrkörpersystems (MKS) ermittelt wird.

12. Verfahren nach einem der vorhergehenden Ansprüche, **dadurch gekennzeichnet, dass** ein Positions-Regler ($R_x$) vorgesehen wird, der aus einer vorgegebenen Soll-Position ($x_{soll}$) und aus einer Ist-Position ($x_{ist}$), welche eine Position ($x_A$, $x_R$) eines der Körper ($J_A$, $J_R$) des Mehrkörpersystems (MKS) beschreibt, die dem Geschwindigkeits-Regler ($R_n$) vorgegebene Soll-Geschwindigkeit ($v_{soll}$) zum Einregeln der Ist-Geschwindigkeit ($v_{ist}$) ermittelt.

13. Regelkreis (100) zur Stillstandsregelung eines Mehrkörpersystems (MKS) umfassend zumindest einen Antriebs-Körper ($J_A$) und einen mit dem Antriebs-Körper ($J_A$) mechanisch gekoppelten Reibungs-Körper ($J_R$), wobei eine Steuereinheit vorgesehen ist, auf welcher ein Geschwindigkeits-Regler ($R_n$) implementiert ist, wobei der Geschwindigkeits-Regler ($R_n$) ausgestaltet ist, aus einer vorgegebenen Soll-Geschwindigkeit $v_{soll}=0$ und aus einer Ist-Geschwindigkeit ($v_{ist}$) des Mehrkörpersystems (MKS) eine Stellgröße (Fs) zum Einregeln der Ist-Geschwindigkeit ($v_{ist}$) auf die Soll-Geschwindigkeit ($v_{soll}$) zu ermitteln, wobei ein Aktuator (A) vorgesehen ist, welcher ausgestaltet ist, die Stellgröße (Fs) in eine auf den Antriebs-Körper ($J_A$) wirkende Antriebskraft ($F_A$) zu wandeln und wobei auf den Reibungs-Körper ($J_R$) eine Haftreibung ($\mu$) wirkt, **dadurch gekennzeichnet, dass** eine Geschwindigkeits-Ermittlungseinheit vorgesehen ist, welche ausgestaltet ist, eine Geschwindigkeit eines Körpers ($J_A$, $J_R$) des Mehrkörpersystems (MKS) als mit einem Messrauschen ($n_v$) behaftete Mess-Geschwindigkeit ($v_{mess}$) zu ermitteln und die ermittelte Mess-Geschwindigkeit ($v_{mess}$) einem Totzonen-Element (101) zuzuführen, wobei das Totzonen-Element (101) ausgestaltet ist, die Mess-Geschwindigkeit ($v_{mess}$) zu einer Totzonen-Geschwindigkeit ($v_{tot}$) zu wandeln, wobei die Totzonen-Geschwindigkeit ($v_{tot}$) für Werte der Mess-Geschwindigkeit ($v_{mess}$) über einem Wert Null und unter einem positiven Totzonen-Grenzwert ($v_{tot,O}$) einen Wert Null und für Werte der Mess-Geschwindigkeit ($v_{mess}$) über dem positiven Totzonen-Grenzwert ($v_{tot,O}$) den Wert der Mess-Geschwindigkeit ($v_{mess}$) annimmt, wobei der positive Totzonen-Grenzwert ($v_{tot,O}$) größer als ein vorgegebener Maximalwert des Messrauschens ($n_v$) der Mess-Geschwindigkeit ($v_{mess}$) gewählt ist, **und dass** das Totzonen-Element (101) ausgestaltet ist, die Totzonen-Geschwindigkeit ($v_{tot}$) dem Geschwindigkeits-Regler ($R_n$) als Ist-Geschwindigkeit ($v_{ist}$) zum Regeln zuzuführen.

14. Regelkreis (100) nach Anspruch 13, **dadurch gekennzeichnet, dass** das Totzonen-Element (101) als Bestandteil der Geschwindigkeits-Ermittlungseinheit ausgeführt ist.

15. Regelkreis (100) nach Anspruch 13 oder 14, **dadurch gekennzeichnet, dass** das Totzonen-Element (101) ausgestaltet ist, eine Quantisierung der Mess-Geschwindigkeit ($v_{mess}$) zu implementieren, wobei die Quantisierung größer ist als der Maximalwert des Messrauschens ($n_v$) der Mess-Geschwindigkeit ($v_{mess}$), sodass die quantisierte Mess-Geschwindigkeit ($v_{mess}$) der Totzonen-Geschwindigkeit ($v_{tot}$) entspricht.

Fig. 1 (Stand der Technik)

Fig. 2

Fig. 5

Fig. 3

Fig. 3a

Fig. 6

Fig. 4

Fig. 7a

Fig. 7b

Fig. 7c

EP 4 369 116 A1

Fig. 8a

Fig. 8b

Fig. 8c

EP 4 369 116 A1

Europäisches
Patentamt

European
Patent Office

Office européen
des brevets

# EUROPÄISCHER RECHERCHENBERICHT

**Nummer der Anmeldung**

EP 23 20 8323

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 5 035 301 A (SKALSKI CLEMENT A [US]) 30. Juli 1991 (1991-07-30) * Spalte 1, Zeile 5 – Zeile 53 * * Spalte 6, Zeile 1 – Zeile 10 * ----- | 1-15 | INV. G05B13/02 |
| Y | US 2010/305840 A1 (DOI KATSUNORI [JP]) 2. Dezember 2010 (2010-12-02) * Absätze [0160], [0421] – [0425], [0436] – [0442]; Abbildung 36 * ----- | 1-15 | |
| A | US 2002/062177 A1 (HANNAFORD BLAKE [US] ET AL) 23. Mai 2002 (2002-05-23) * Absätze [0040], [0189] – [0196] * ----- | 1-15 | |
| A | US 2019/170784 A1 (KIM SUNGYUN [KR] ET AL) 6. Juni 2019 (2019-06-06) * Absätze [0085] – [0092] * ----- | 1-15 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| München | 22. März 2024 | Frey, Richard |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 20 8323

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-03-2024

| Im Recherchenbericht angeführtes Patentdokument | | Datum der Veröffentlichung | Mitglied(er) der Patentfamilie | | Datum der Veröffentlichung |
|---|---|---|---|---|---|
| US 5035301 | A | 30-07-1991 | AU | 625353 B2 | 09-07-1992 |
| | | | DE | 69029878 T2 | 22-05-1997 |
| | | | EP | 0406771 A2 | 09-01-1991 |
| | | | ES | 2103714 T3 | 01-10-1997 |
| | | | HK | 134798 A | 27-02-1998 |
| | | | JP | 3037970 B2 | 08-05-2000 |
| | | | JP | H03143883 A | 19-06-1991 |
| | | | SG | 47954 A1 | 17-04-1998 |
| | | | US | 5035301 A | 30-07-1991 |
| US 2010305840 | A1 | 02-12-2010 | CN | 101821122 A | 01-09-2010 |
| | | | US | 2010305840 A1 | 02-12-2010 |
| | | | WO | 2009084384 A1 | 09-07-2009 |
| US 2002062177 | A1 | 23-05-2002 | AU | 9263401 A | 26-03-2002 |
| | | | US | 2002062177 A1 | 23-05-2002 |
| | | | WO | 0223286 A1 | 21-03-2002 |
| US 2019170784 | A1 | 06-06-2019 | CN | 109866777 A | 11-06-2019 |
| | | | DE | 102018206845 A1 | 06-06-2019 |
| | | | KR | 20190066259 A | 13-06-2019 |
| | | | US | 2019170784 A1 | 06-06-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19742370 B4
- EP 0473914 A2
- EP 3355032 B1